# EUROPEAN PATENT SPECIFICATION

(11) **EP 4 018 890 B1**
(45) Date of publication and mention of the grant of the patent: **18.09.2024**
(21) Application number: 20854122.7
(22) Date of filing: 29.06.2020
(51) Int. Cl.: B65D 81/34, A47J 36/02, A47J 36/26

(54) **ROTATING STRUCTURE AND CONTAINER USING ROTATING STRUCTURE**
ROTIERENDE STRUKTUR UND BEHÄLTER MIT VERWENDUNG DER ROTIERENDEN STRUKTUR
STRUCTURE TOURNANTE ET RÉCIPIENT UTILISANT UNE STRUCTURE TOURNANTE

(30) Priority: 21.08.2019 KR 20190102453
(43) Date of publication of application: 29.06.2022
(73) Proprietor: CJ Cheiljedang Corporation, Seoul 04560 (KR)
(72) Inventor: SHINE, Sung Woo, Seoul 04560 (KR); SAGONG, Hun Gu, Seoul 04560 (KR)
(74) Representative: Potter Clarkson
(86) International application number: PCT/KR2020/008434
(87) International publication number: WO 2021/033910

(56) References cited:
- JP-A- 2004 331 175
- JP-A- 2009 007 019
- JP-A- 2009 149 374
- JP-A- 2011 115 407
- JP-A- 2016 210 461
- KR-B1- 102 127 366
- US-A- 4 132 811
- US-B2- 9 528 757

## Description

### TECHNICAL FIELD

The present disclosure relates to a rotating structure and a container using the rotating structure, and more particularly, to a rotating structure for expanding a pouch by including, inside the pouch, a raw material that is sublimated or evaporated via heating, and rotating a container according to expansion of the pouch, and a container using the rotating structure.

### BACKGROUND ART

A microwave oven is often used to heat food, and the microwave oven heats the food by using dielectric-based heating as a technical basis. When the food is heated by using such a microwave oven, there is no element that may change a distribution and intensity of an electric field other than a dielectric change according to a temperature change of a heating body (food); and a local heating or non-heating phenomenon occurs in the heating body (food).

To prevent such a phenomenon, a turntable or stirrer is provided in the microwave oven, and a shape of the electric field is changed by heating a product via rotation of the turntable or stirrer.

However, because both the turntable and the stirrer use a method in which the product or a stirrer reflection plate concentrically rotates based on a vertical shaft, upward and downward changes in the electric field and an electric field change in a same radius from a rotation center are not large, and thus an overheating phenomenon occurs in upward and downward directions or in a specific concentric direction.

In detail, even when the turntable or stirrer rotating based on the rotation center is used, local overheating and non-heating phenomena in upward and downward directions of the heating body are unable to be prevented. Also, due to characteristics of the turntable rotating based on the rotation center, heating is performed in a concentric shape, and thus it is unable to prevent occurrence of relatively irregular heating according to a distance from the rotation center.

In particular, when the heating body is relatively thick in a specific direction in 3-dimensions, it is difficult to prevent the local overheating and non-heating phenomena inside a thick portion due to above reasons.

Also, when the heating body has a cylindrical shape or cone shape, the local overheating and non-heating phenomena of a product occurs due to the above reasons, and the relatively irregular heating occurs according to the distance from the rotation center.

US 4132811 A discloses an expandable vessel that is operatively connected to a food product. When heated the vessel expands moving the food and thereby distributing non-uniformly distributed microwave energy more evenly throughout the food. In one embodiment, the vessel is a folded or coiled bag which retains steam and vapor evolved during the heating operation. The vapor expands the bag causing it to unfold i.e., straighten out thereby moving the food product from one location in the oven to another as microwave energy is applied. US41382811 discloses a rotating structure as defined in the preamble of claim 1.

JP 2009007019 A discloses a packaging bag for use in a microwave oven, the bag having a steam releasing part in its edge and being stored in a box body. The box body comprises: a top side and a bottom side facing each other; and side faces continuous to the edges of the top side and the bottom side. A lid is formed on the top side in an openable manner. The packaging bag is double-folded, one side part having the steam releasing part by the double-fold faces the top side, the other side part faces the bottom side, and the parts are stored in the box body.

### DESCRIPTION OF EMBODIMENTS

### TECHNICAL PROBLEM

The present disclosure is for solving above-described problems and, more particularly, relates to a rotating structure for expanding a pouch by including, inside the pouch, a raw material that is sublimated or evaporated via heating, and rotating a container according to expansion of the pouch, and a container using the rotating structure.

### SOLUTION TO PROBLEM

A rotating structure includes: a pouch coupled to a container and wound around a circumference of the container; and a raw material provided inside the pouch, characterized in that the raw material expands the pouch by being sublimated or evaporated while being heated, and the container is rotated according to expansion of the pouch, wherein there are a plurality of the pouches and wherein the plurality of pouches rotate the container while expansion points of time of the plurality of pouches are differently formed according to the raw material inside the plurality of pouches.

The pouch may be wound around the circumference of the container while forming a shape of a band, and when the pouch is expanded by the raw material, the pouch may be gradually expanded along a long direction of the band.

The raw material may be provided at one side end of the pouch in the shape of the band, and the pouch may start to be expanded from the one side end of the pouch.

The pouch may include a pin hole that is openable by gas pressure, and residual internal pressure inside the pouch may be adjusted according to a size of the pin hole opened by the gas pressure.

The pin hole of one pouch may be connected to the pin hole of another pouch through a connection portion.

An expansion point of time of the pouch may be adjusted according to an amount of the raw material inside the pouch.

An expansion point of time of the pouch may be adjusted according to a sublimation temperature or evaporation temperature of the raw material.

The raw material may be provided inside the pouch in a frozen state, and an expansion point of time of the pouch may be adjusted according to a frozen shape of the raw material.

An expansion point of time of the pouch may be adjusted according to a dielectric constant of the raw material.

A container including a rotating structure as defined herein having a pouch coupled thereto and wound around a circumference of the container comprises a container storing content therein and having a container shape, characterized in that the raw material inside the pouch expands the pouch by being sublimated or evaporated while being heated, and the container is rotated according to expansion of the pouch., wherein there are a plurality of the pouches and wherein the plurality of pouches rotate the container while expansion points of time of the plurality of pouches are differently formed according to the raw material inside the plurality of pouches.

The pouch may be wound around the circumference of the container while forming a shape of a band, and when the pouch is expanded by the raw material, the container may be rotated as the pouch is gradually expanded along a long direction of the band.

The raw material may be provided at one side end of the pouch having the shape of the band.

Since the pouch is as defined herein it may include a pin hole that is openable by gas pressure, and residual internal pressure inside the pouch may be adjusted according to a size of the pin hole opened by the gas pressure.

Further the pin hole of one pouch may be connected to the pin hole of another pouch through a connection portion.

A direction in which one pouch from among the plurality of pouches rotates the container may be opposite to a direction in which another pouch from among the plurality of pouches rotates the container.

### ADVANTAGEOUS EFFECTS OF DISCLOSURE

The present disclosure relates to a rotating structure and a container using the rotating structure, wherein a pouch is expanded by including, inside the pouch, a raw material sublimated or evaporated via heating and the container is rotated according to expansion of the pouch, thereby uniformly heating content inside the container having a cylindrical shape.

Also, in the present disclosure, by adjusting a point of time when the pouch is expanded through the raw material included inside the pouch, rotation of the container can be realized according to a designed order and time, and accordingly, rotation of the container suitable for cooking of a specific product can be realized.

### BRIEF DESCRIPTION OF DRAWINGS

FIG. 1 is a view showing a rotating structure coupled to a container of a cylindrical shape, according to an embodiment of the present disclosure.
FIG. 2 is a view showing a container of a cylindrical shape rotating as a pouch of a rotating structure is expanded, according to an embodiment of the disclosure.
FIGS. 3(a) and 3(b) are views showing rotating structures according to embodiments of the disclosure.
FIG. 4(a) is a side view showing a rotating structure coupled to a container of a cylindrical shape, according to an embodiment of the disclosure, and FIG. 4(b) is a side view showing a container of a cylindrical shape rotating as a pouch of a rotating structure is expanded, according to an embodiment of the disclosure.
FIG. 5 is a view showing a plurality of rotating structures coupled to a container of a cylindrical shape, according to an embodiment of the disclosure.
FIG. 6 is a view showing a plurality of rotating structures coupled to a container and rotating as a pouch is expanded, according to an embodiment of the disclosure.
FIG. 7 is a view showing pin holes of a plurality of pouches connected through a connection portion, according to an embodiment of the disclosure.

### BEST MODE

A rotating structure according to an embodiment of the present disclosure includes: a pouch coupled to a container and wound around a circumference of the container; and a raw material provided inside the pouch, wherein the raw material expands the pouch by being sublimated or evaporated while being heated, and the container is rotated according to expansion of the pouch as defined by claim 1.

A container including a rotating structure, according to an embodiment of the present disclosure, includes: a container storing content therein and having a container shape; a pouch coupled to the container and wound around a circumference of the container of the container shape; and a raw material provided inside the pouch, wherein the raw material expands the pouch by being sublimated or evaporated while being heated, and the container is rotated according to expansion of the pouch as defined by claim 1.

### MODE OF DISCLOSURE

The present specification describes the principles of the present disclosure and discloses embodiments such that the scope of right of the present disclosure is clarified and one of ordinary skill in the art may practise the present disclosure. The embodiments may be implemented in various forms.

The terms, such as "includes", "may include", and the like, which may be used in various embodiments of the disclosure indicate the existence of a function, operation, or component of the present disclosure, and do not limit one or more additional functions, operations, or components. Also, in various embodiments of the present disclosure, it is to be understood that terms, such as "including" or "having", etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

A rotating structure and a container using the rotating structure, according to an embodiment of the present disclosure, may be used for microwave oven cooking, and the container may be rotated according to expansion of a pouch, as the pouch is heated. However, the present disclosure is not limited thereto, and in the rotating structure and the container using the rotating structure, according to an embodiment of the present disclosure, the container may be rotated according to the expansion of the pouch, as the pouch is heated by a heating unit other than a microwave oven.

The container according to an embodiment of the present disclosure may be a rigid type or a flexible type, and is not limited to a specific material. A rigid container may be a cylindrical container formed of a material, such as paper, plastic, or the like, for accommodating content. A flexible container may be a flexible pouch container formed of a material, such as polyethylene terephthalate (PET) or the like, for accommodating content, and may have various shapes depending on shapes of the content.

Also, a container shape according to an embodiment of the present disclosure described below indicates a cylindrical shape, a polygonal container shape, a cone shape, a poly-pyramid shape, a truncated cone shape, or a truncated poly-pyramid shape, and may vary as long as the container shape has a narrow width while extending in one direction such as to be rotated while rolling.

Hereinafter, embodiments of the present disclosure will be described in more detail with reference to the accompanying drawings.

A rotating structure 100 according to an embodiment of the present disclosure includes a pouch 110 and a raw material provided inside the pouch 110.

The pouch 110 is coupled to a container 200, is wound around a circumference of the container 200 and rolls and rotates the container 200 according to expansion of the pouch 110.

The container 200 may have a container shape and content is stored therein. The container 200 extends in one direction with a narrow width, such as a cylindrical shape or a cone shape, and has a shape capable of being rotated while rolling. The container 200 may have a cylindrical shape, a polygonal container shape, a cone shape, a poly-pyramid shape, a truncated cone shape, or a truncated poly-pyramid shape.

The container 200 may pack as content a product that extends in one direction and has a narrow width, such as gimbap, hotdog, or sausage, and the content stored in the container 200 may be food heated by a heating unit, such as a microwave oven. However, the content stored inside the container 200 is not limited to food and may vary as long as the content is capable of being heated by the heating unit.

Also, the container 200 may be a film or the like surrounding the exterior of the content of the product that extends in one direction and has a narrow width, such as gimbap, taco, hotdog, or sausage, and the container 200 may have the container shape by surrounding and packing the content of the product that extends in one direction and has a narrow width, such as gimbap, taco, hotdog, or sausage. For example, the container 200 may be a cylindrical flexible container formed of a material, such as paper, plastic, or the like, for surrounding gimbap, taco, hotdog, sausage, or the like.

The pouch 110 may be formed of a material capable of being expanded while accommodating a gas expanding in volume according to sublimation or evaporation of the raw material described below, and the pouch 110 may be formed of a polymer film material. However, a material of the pouch 110 is not limited to the polymer film material, and various materials may be used as long as the pouch 110 is able to accommodate the gas expanding in volume while being expanded in a desired direction and shape.

The pouch 110 is coupled to the container 200 while being wound around the circumference of the container 200, and the pouch 110 may be coupled to various locations of the container 200 as long as the container 200 is rolled and rotated according to the expansion. The pouch 110 being coupled to the container 200 may indicate that the pouch 110 is directly attached to and coupled to the container 200, or that the pouch 110 is indirectly coupled to the container 200 via another configuration.

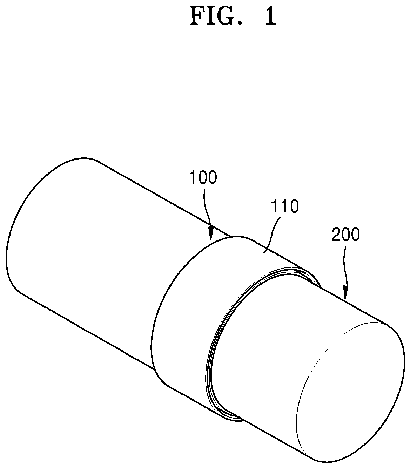

Referring to FIG. 1, the pouch 110 may be wound around the circumference at one side of the container 200 while forming a shape of a band, and may roll and rotate the container 200 as the pouch 110 is unwound by the expansion.

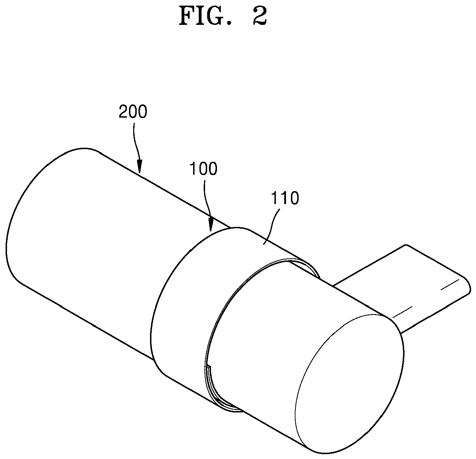

Referring to FIG. 2, when the pouch 110 is expanded by the raw material, the pouch 110 may be gradually expanded along a long direction of the band. The long direction of the band indicates a length direction of the band, which is elongated when the pouch 110 has the shape of the band.

The pouch 110 is wound around the circumference of the container 200 having the container shape, and when the pouch 110 is gradually expanded along the long direction of the band, rotation momentum is generated at one side of the container 200, and thus the container 200 is rotated and top and bottom portions of the container 200 are reversed.

Here, the raw material provided in the pouch 110 may be provided at one side end of the pouch 110 having the shape of band, and accordingly, the pouch 110 may start to be expanded from the one side end of the pouch 110. When the rotation momentum is applied to the container 200 via the expansion of the pouch 110, the container 200 may be effectively rotated when the rotation momentum is applied only at one side of the container 200.

For example, when the pouch 110 having the shape of band starts to be simultaneously expanded in all areas, force is applied to various points along the circumference of the container 200, and thus the container 200 is unable to be rotated in one direction. Accordingly, the raw material provided in the pouch 110 may be provided at one side end of the pouch 110 having the shape of band, and accordingly, the pouch 110 may start to be expanded from the one side end of the pouch 110.

The raw material is provided inside the pouch 110, and the raw material is able to expand the pouch 110 by forming a gas expanding in volume by being sublimated or evaporated while being heated.

The raw material may form a gas capable of being expanded in volume as a partial phase change occurs at a designated temperature, and may be a solvent for forming the gas capable of being expanded in volume by being sublimated at the designated temperature or a frozen material for forming the gas capable of being expanded in volume by being evaporated at the designated temperature. The raw material may be in a frozen solid phase according to a melting point and an evaporation point, or may be in a liquid phase. As such, various materials may be used as the raw material as long as the gas capable of being expanded in volume as the partial phase change occurs at the designated temperature is formed.

The raw material may be a solvent, such as water, alcohol, or the like, which is harmless to a human body, and a solute, such as salt, calcium, magnesium, or the like, may be added to the solvent to adjust degrees of the solvent absorbing an electromagnetic field and being heated.

The pouch 110 may be expanded by the gas formed as the raw material is sublimated or evaporated according to heating, and an expansion point of time of the pouch 110 may be adjusted via the raw material. In detail, the pouch 110 may be expanded at a designated temperature and at a designated time, according to the raw material provided inside the pouch 110.

Here, the expansion point of time of the pouch 110 may be a point of time when the raw material starts a phase change and forms the gas, and the expansion point of time of the pouch 110 may be adjusted according to an amount or type of the raw material inside the pouch 110.

According to an embodiment of the present disclosure, the content stored inside the container 200 may be various types of food, and a temperature and time for rotating the container 200 may vary depending on a type of the food. As such, the expansion point of time of the pouch 110 may be adjusted to adjust the temperature and time for rotating the container 200, and the expansion point of time of the pouch may be adjusted by changing the amount or type of the raw material provided inside the pouch 110.

In detail, a temperature of the expansion point of time of the pouch 110 may be changed by changing the type of raw material provided inside the pouch 110. A sublimation temperature and evaporation temperature may be changed depending on a material of the raw material, and by changing the type of raw material, the sublimation temperature or evaporation temperature of the raw material is adjusted, thereby adjusting the expansion point of time of the pouch 110.

Also, by changing the amount of raw material provided inside the pouch 110, the time of expansion point of time of the pouch 110 may be adjusted. When the amount of raw material provided inside the pouch 110 is increased or decreased, the expansion point of time of the pouch 110 may be slowed down or quickened.

According to an embodiment of the present disclosure, the expansion point of time of the pouch 110 may be adjusted according to a shape of the raw material provided inside the pouch 110. The raw material may be provided inside the pouch 110 in a frozen state, and the temperature and time of the expansion point of time may be changed according to the shape of the frozen raw material.

In detail, because the raw material that strongly emits heat according to a dielectric constant has a shape in which an electric field is focused on a surface, the temperature and time of the expansion point of time may be changed by adjusting a ratio of surface area to volume, via the shape of the raw material. When the ratio of surface area to volume is small in the raw material, the expansion point of time may be slowed down, and when the ratio of surface area to volume is large in the raw material, the expansion point of time may be quickened. When the raw material is of a thin film shape, the expansion point of time may be quickened as the ratio of surface area to volume is increased.

Also, the expansion point of time of the pouch 110 may be adjusted according to the dielectric constant of the raw material. The container 200 may be cooked by a microwave oven, and when the dielectric constant of the raw material is adjusted, a distribution and intensity of an electric field formed by the microwave oven may be adjusted, and accordingly, the expansion point of time of the pouch 110 may be adjusted.

The dielectric constant of the raw material may be adjusted via a solute that dissolves in a solvent, and by adjusting the dielectric constant of the raw material via the solute, such as salt, calcium, magnesium, or the like, a degree of the raw material emitting heat by absorbing the electric field may be adjusted.

As described above, the pouch 110 is capable of being expanded by the gas formed as the raw material is sublimated or evaporated, and the pouch 110 may rotate the container 200 according to the expansion. The pouch 110 may variously realize the rotation of the container 200 via the expansion, as will be described in detail below.

Referring to FIG. 1 and 2, the pouch 110 may be wound around the circumference at one side of the container 200 having the container shape while forming the shape of band, and may roll and rotate the container 200 as the pouch 110 is unwound by the expansion.

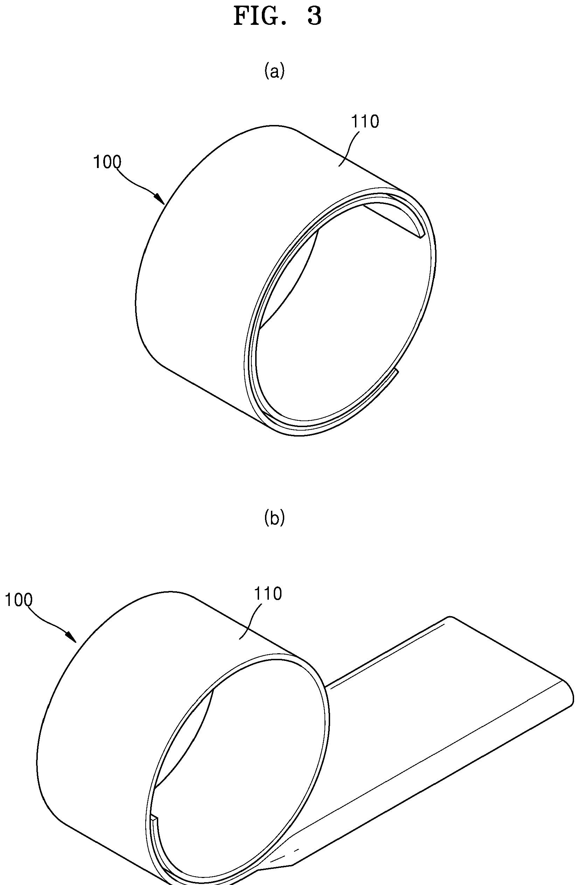

Referring to FIGS. 3(a) and 3(b), when the pouch 110 is expanded by the raw material, the pouch 110 may be linearly expanded. The pouch 110 may be wound around the circumference of the container 200 having the container shape, and as shown in FIGS. 3(a) and 3(b), the container 200 may be located at a center hole of the pouch 110 and thus the pouch 110 may be attached and fixed to a part of the container 200.

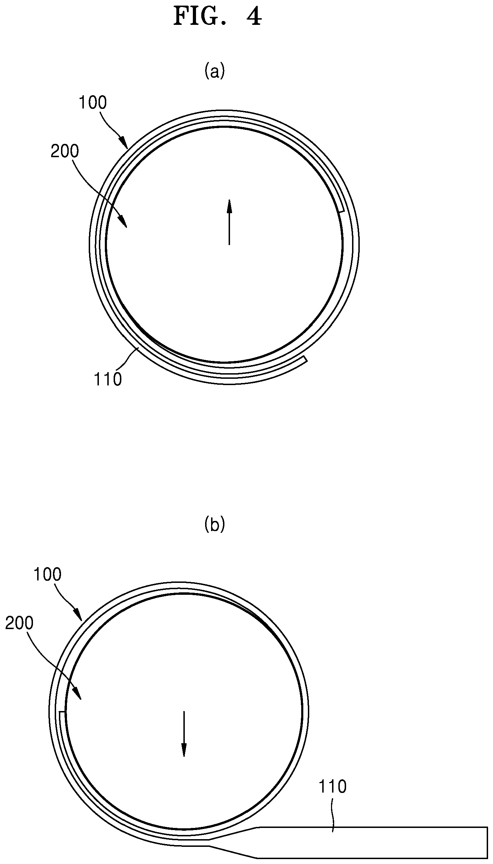

Referring to FIGS. 4(a) and 4(b), the pouch 110 may apply the rotation momentum at one side of the container 200 as one side of the pouch 110 linearly expands, and thus the container 200 may be rotated and the top and bottom portions of the container 200 may be reversed.

In detail, referring to FIG. 4(b), when the pouch 110 is linearly expanded, force is transferred in a normal direction from a bottom side surface portion of the container 200, and accordingly, the rotation momentum is generated in the container 200 having the container shape and the container 200 is rotated. (As shown in FIGS. 4(a) and 4(b), the top and bottom portions of the container 200 being reversed as the container 200 is rotated may be identified from a direction of an arrow shown inside the container 200 of FIG. 4(a) that is reversed as shown in FIG. 4(b).)

As such, by reversing the top and bottom portions of the container 200 according to the expansion of the pouch 110, top and bottom portions of the content inside the container 200 may be uniformly heated.

Also, the container 200 may be continuously moved during cooking while adjusting an expansion speed of the pouch 110 according to the raw material inside the pouch 110, and accordingly, the content inside the container 200 may be uniformly heated. In addition, the container 200 may be completely rotated at least one round by adjusting a length of the pouch 110 having the shape of band being wound around the circumference of the container 200, and according to characteristics of the product, the container 200 may be rotated only half a around.

According to the invention there is a plurality of the pouches 110, and the container 200 may be rotated as the plurality of pouches 110 are coupled to the container 200.

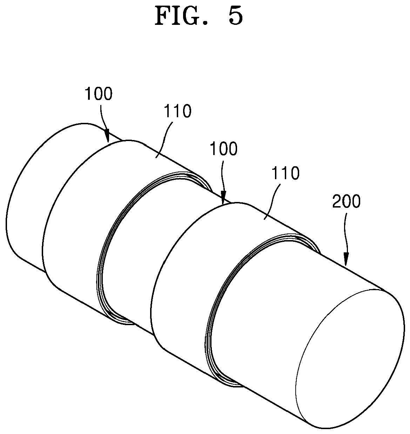

When only one pouch 110 is provided, the container 200 may be rotated only in one direction, but depending on the content inside the container 200, the container 200 may need to be rotated on one direction and then in another direction. In this regard, the plurality of pouches 110 may be provided, and as shown in FIG. 5, two pouches 110 may be provided.

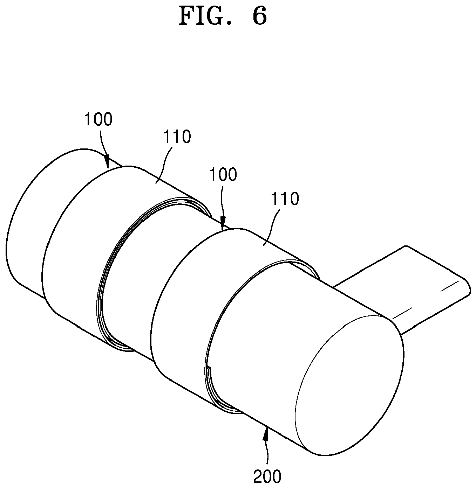

Referring to FIG. 6, when the plurality of pouches 110 are coupled to the container 200, the plurality of pouches 110 may be sequentially expanded, and accordingly, the container 200 may be rotated in one direction and then may be rotated in another direction again.

Here, the plurality of pouches 110 may have different expansions point of time depending on the raw materials inside the pouches 110, and accordingly, the plurality of pouches 110 may rotate the container 200 by being sequentially expanded.

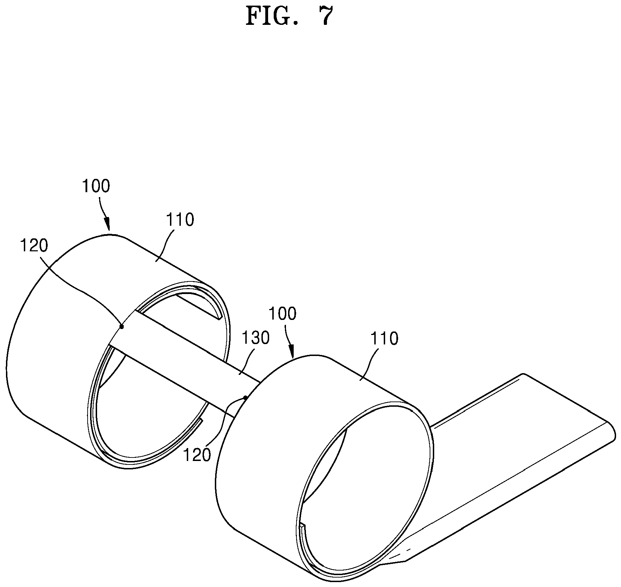

Referring to FIG. 7, the pouch 110 may include a pin hole 120 that may be opened by gas pressure. The pouch 110 may maintain an expanded state, but the pouch 110 may return to its original state from the expanded state. The pin hole 120 externally discharges the gas inside the expanded pouch 110, and the pin hole 120 externally discharges the gas inside the pouch 110 by being opened by designated gas pressure.

As shown in FIGS. 5 and 6, when two pouches 110 are coupled to the container 200, after one pouch 110 is expanded and rotated the container 200 in one direction, the expansion of the one pouch 110 needs to be removed for the other pouch 110 to efficiently apply force to the container 200.

When the pouch 110 includes the pin hole 120, after the one pouch 110 is expanded, the expansion of the one pouch 110 may be removed before the other pouch 110 is expanded, and accordingly, the container 200 may be efficiently rotated in the other direction.

The pin hole 120 is completely opened by the gas pressure, thereby turning the inside of the pouch 110 back to a normal pressure state, and immediately removing the expansion of the pouch 110. Alternatively, the pin hole 120 may slowly remove the expansion of the pouch 110 by adjusting residual internal pressure inside the pouch 110.

In detail, the residual internal pressure inside the pouch 110 may be adjusted according to a size of the pin hole 120 opened by the gas pressure. When the size of the pin hole 120 opened by the gas pressure is large, the gas inside the expanded pouch 110 is quickly externally discharged, and thus the expansion of the pouch 110 may be quickly removed.

When the size of the pin hole 120 opened by the gas pressure is small, the gas inside the expanded pouch 110 is slowly externally discharged, and thus the expansion of the pouch 110 may be slowly removed.

The gas inside the pouch 110 may be externally discharged through the pin hole 120, but according to an embodiment of the disclosure, the gas inside the pouch 110 may move into the other pouch 110 via a connection portion 130.

Referring to FIG. 7, when the plurality of pouches 110 are provided, the connection portion 130 connects the pin hole 120 of one pouch 110 from among the plurality of pouches 110 to the pin hole 120 of the other pouch 110, and the connection portion 130 may be a path through which the gas inside the pouches 110 moves.

When the pin holes 120 and the connection portion 130 are provided, after the one pouch 110 is expanded, the gas may be moved to the other pouch 110, thereby expanding the other pouch 110 and removing the expansion of the one pouch 110.

Also, by using the connection portion 130, the one pouch 110 may be re-expanded by moving the gas to the one pouch 110 again. The rotating structure 100 according to an embodiment of the present disclosure may variously realize rotation directions of the container 200 by expanding, reducing in volume, and re-expanding the pouch 110 by using the pin holes 120 and the connection portion 130.

For example, the container 200 may be rotated in one direction according to expansion of the one pouch 110, and then may be rotated in another direction as the gas of the one pouch 110 is moved to the other pouch 110 via the connection portion 130. Then, the container 200 may be rotated in the one direction again as the gas in the other pouch 110 is moved to the one pouch 110 via the connection portion 130 again.

As such, the rotating structure 100 according to an embodiment of the present disclosure may variously realize rotation of the container 200 by expanding, reducing in volume, and re-expanding the pouch 110 by using the pin holes 120 and the connection portion 130.

Here, when the plurality of pouches 110 are provided, the expansion points of time of the pouches 110 may be differently adjusted according to the raw materials inside the plurality of pouches 110, and accordingly, a method by which the container 200 is rotated by be changed.

A container using a rotating structure, according to an embodiment of the present disclosure, relates to a container to which the rotating structure 100 described above is coupled, and because the rotating structure 100 has been described above, detailed descriptions thereof are omitted. A configuration and characteristics of the rotating structure 100 according to an embodiment of the present disclosure are all applicable to a container using a rotating structure, according to an embodiment of the disclosure.

The container 200 may have a container shape and content is stored therein. The container 200 extends in one direction with a narrow width, such as a cylindrical shape or a cone shape, and has a shape capable of being rotated while rolling. The container 200 may have a cylindrical shape, a polygonal container shape, a cone shape, a poly-pyramid shape, a truncated cone shape, or a truncated poly-pyramid shape.

The container 200 may pack the content of a product that extends on one direction and has a narrow width, such as gimbap, taco, hotdog, or sausage, and the content stored in the container 200 may be food heated by a heating unit, such as a microwave oven. However, the content stored inside the container 200 is not limited to food and may vary as long as the content is a heated by capable of being heated by the heating unit.

Also, the container 200 may be a film or the like surrounding the exterior of the content of the product that extends in one direction and has a narrow width, such as gimbap, taco, hotdog, or sausage, and the container 200 may have the container shape by the content of the product that extends in one direction and has a narrow width, such as gimbap, taco, hotdog, or sausage.

The container 200 may be rotated by the expansion of the pouch 110 being wound around the circumference of the container 200 while having the shape of band, and when the pouch 110 is expanded, the pouch 110 may be gradually expanded along the long direction of the band to rotate the container 200. The long direction of the band indicates a length direction of the band, which is elongated when the pouch 110 has the shape of the band.

The raw material provided inside the pouch 110 having the shape of band may be provided at one side end of the pouch 110, and accordingly, the expansion of the pouch 110 may start from one side end of the pouch 110.

The pin hole 120 capable of being opened by the gas pressure may be provided in the pouch 110, and the residual internal pressure inside the pouch 110 may be adjusted according to the size of the pin hole 120.

When the plurality of pouches 110 are provided, the expansion points of time of the pouches 110 are differently formed depending on the raw materials in the pouches 110, and accordingly, the container 200 may be rotated in one direction or another direction. Here, a direction in which one of the plurality of pouches 110 rotates the container 200 may be opposite to a direction in which another one of the plurality of pouches 110 rotates the container 200.

Also, when the plurality of pouches 110 are provided, the pin hole 120 of the one pouch 110 is connected to the pin hole 120 of the other pouch 110 via the connection portion 130, and the one pouch 110 may repeat expansion, reduction in volume, and re-expansion, thereby realizing movement of the container 200.

A rotating structure and a container using the rotating structure, according to an embodiment of the present disclosure, have following effects.

The rotating structure and the container using the rotating structure, according to an embodiment of the present disclosure, expand the pouch 110 by providing the raw material that is sublimated or evaporated via heating, inside the pouch 110. The container 200 according to an embodiment of the present disclosure is rotatable according to expansion of the pouch 110, and the container 200 may be reversed upside down as the container 200 is rotated via the pouch 110.

By reversing the container 200 upside down according to the expansion of the pouch 110, content inside the container 200 may be reversed upside down, and accordingly, top and bottom portions of the content inside the container 200 may be uniformly heated.

The rotating structure and the container using the rotating structure, according to an embodiment of the present disclosure, adjust internal pressure for opening the pin hole 120 provided in the pouch 110 while adjusting a point of time when the pouch 110 is expanded via the raw material provided inside the pouch 110, thereby realizing rotation of the container 200 according to a designed order and time, and accordingly, rotation suitable for cooking of a specific product may be realized.

While the present disclosure has been described in detail, the present disclosure is not limited to the above-described embodiments, and various modifications may be provided within a range that does not deviate from the scope of the present disclosure as defined by the claims. Therefore, the true scope of technical protection of the present disclosure should be determined by the technical ideas of the enclosed claims.

## Claims

1. A rotating structure (100) comprising:
a pouch (110) coupled to a container (200) and wound around a circumference of the container; and
a raw material provided inside the pouch,
wherein the raw material expands the pouch (110) by being sublimated or evaporated while being heated, and the container (200) is rotated according to expansion of the pouch (110), wherein there are a plurality of the pouches (110),
and **characterized in that** the plurality of pouches (110) rotate the container (200) while expansion points of time of the plurality of pouches (110) are differently formed according to the raw material inside the plurality of pouches (110).

2. The rotating structure (100) of claim 1, wherein the pouch (110) is wound around the circumference of the container (200) while forming a shape of a band, and when the pouch (110) is expanded by the raw material, the pouch (110) is gradually expanded along a long direction of the band.

3. The rotating structure (100) of claim 2, wherein the raw material is provided at one side end of the pouch (110) in the shape of the band, and the pouch (110) starts to be expanded from the one side end of the pouch (110).

4. The rotating structure (100) of claim 1, wherein the pouch (110) comprises a pin hole (120) that is openable by gas pressure.

5. The rotating structure (100) of claim 4, wherein residual internal pressure inside the pouch (110) is adjustable according to a size of the pin hole (120) opened by the gas pressure.

6. The rotating structure (100) of claim 4, wherein there are a plurality of the pouches (110), and the pin hole (120) of one pouch is connected to the pin hole (120) of another pouch through a connection portion (130).

7. The rotating structure (100) of claim 1, wherein an expansion point of time of the pouch (110) is adjusted according to an amount of the raw material inside the pouch (110).

8. The rotating structure (100) of claim 1, wherein an expansion point of time of the pouch (110) is adjusted according to a sublimation temperature or evaporation temperature of the raw material.

9. The rotating structure (100) of claim 1, wherein the raw material is provided inside the pouch (110) in a frozen state, and an expansion point of time of the pouch (110) is adjusted according to a frozen shape of the raw material.

10. The rotating structure (100) of claim 1, wherein an expansion point of time of the pouch (110) is adjusted according to a dielectric constant of the raw material.

11. A container (200) including a rotating structure (100), according to any preceding claim, having a pouch coupled thereto and wound around a circumference of the container (200), the container (200) comprising
a container (200) storing content therein and having a container shape,
wherein the raw material inside the pouch (110) of the rotating structure (100) expands the pouch (110) by being sublimated or evaporated while being heated, and the container (200) is rotated according to expansion of the pouch (110), **characterized in that**
there are a plurality of the pouches and wherein the plurality of pouches (110) rotate the container (200) while expansion points of time of the plurality of pouches (110) are differently formed according to the raw material inside the plurality of pouches (110).

12. The container of (200) claim 11, wherein the pouch (110) is wound around the circumference of the container (200) while forming a shape of a band, and when the pouch (110) is expanded by the raw material, the container (200) is rotated as the pouch (110) is gradually expanded along a long direction of the band.

13. The container (200) of claim 12, wherein the raw material is provided at one side end of the pouch (110) having the shape of the band.

14. The container (200) of claim 11, wherein a direction in which one pouch (110) from among the plurality of pouches (110) rotates the container (200) is opposite to a direction in which another pouch (110) from among the plurality of pouches (110) rotates the container (200).

## Patentansprüche

1. Eine rotierende Struktur (100), welche Folgendes umfasst:
einen Beutel (110), der mit einem Behälter (200) verbunden ist und um einen Umfang des Behälters gewickelt ist; und
ein im Inneren des Beutels bereitgestelltes Rohmaterial, wobei das Rohmaterial den Beutel (110) ausdehnt, indem es sublimiert oder verdampft wird, während es erhitzt wird, und der Behälter (200) entsprechend der Ausdehnung des Beutels (110) gedreht wird, wobei es eine Vielzahl von Beuteln (110) gibt, und **dadurch gekennzeichnet, dass** die Vielzahl von Beuteln (110) den Behälter (200) drehen, während die Expansionszeitpunkte der Vielzahl von Beuteln (110) je nach dem Rohmaterial im Inneren der Vielzahl von Beuteln (110) unterschiedlich ausgebildet sind.

2. Die rotierende Struktur (100) nach Anspruch 1, wobei der Beutel (110) um den Umfang des Behälters (200) gewickelt ist, während er die Form eines Bandes bildet, und wenn der Beutel (110) durch das Rohmaterial expandiert wird, wird der Beutel (110) allmählich entlang einer Längsrichtung des Bandes expandiert.

3. Die rotierende Struktur (100) nach Anspruch 2, wobei das Rohmaterial an einem Seitenende des Beutels (110) in der Form des Bandes bereitgestellt wird und der Beutel (110) von dem einen Seitenende des Beutels (110) aus zu expandieren beginnt.

4. Die rotierende Struktur (100) nach Anspruch 1, wobei der Beutel (110) ein Stiftloch (120) aufweist, das durch Gasdruck geöffnet werden kann.

5. Die rotierende Struktur (100) nach Anspruch 4, wobei der verbleibende Innendruck im Inneren des Beutels (110) entsprechend der Größe des durch den Gasdruck geöffneten Stiftlochs (120) einstellbar ist.

6. Die rotierende Struktur (100) nach Anspruch 4, wobei es eine Vielzahl von Beuteln (110) gibt und das Stiftloch (120) eines Beutels mit dem Stiftloch (120) eines anderen Beutels durch einen Verbindungsabschnitt (130) verbunden ist.

7. Die rotierende Struktur (100) nach Anspruch 1, wobei ein Expansionszeitpunkt des Beutels (110) entsprechend einer Menge des Rohmaterials innerhalb des Beutels (110) eingestellt wird.

8. Die rotierende Struktur (100) nach Anspruch 1, wobei ein Expansionszeitpunkt des Beutels (110) entsprechend einer Sublimationstemperatur oder Verdampfungstemperatur des Rohmaterials eingestellt wird.

9. Die rotierende Struktur (100) nach Anspruch 1, wobei das Rohmaterial im Inneren des Beutels (110) in einem gefrorenen Zustand bereitgestellt wird und ein Expansionszeitpunkt des Beutels (110) entsprechend einer gefrorenen Form des Rohmaterials eingestellt wird.

10. Die rotierende Struktur (100) nach Anspruch 1, wobei ein Expansionszeitpunkt des Beutels (110) entsprechend einer Dielektrizitätskonstante des Rohmaterials eingestellt wird.

11. Ein Behälter (200) mit einer rotierenden Struktur (100) nach einem der vorhergehenden Ansprüche, mit einem daran gekoppelten und um einen Umfang des Behälters (200) gewickelten Beutel, wobei der Behälter (200) Folgendes umfasst
einen Behälter (200), der den Inhalt speichert und eine Behälterform hat, wobei das Rohmaterial im Inneren des Beutels (110) der rotierenden Struktur (100) den Beutel (110) ausdehnt, indem es sublimiert oder verdampft wird, während es erhitzt wird, und der Behälter (200) entsprechend der Ausdehnung des Beutels (110) gedreht wird, **dadurch gekennzeichnet, dass**
es eine Vielzahl von Beuteln gibt und wobei die Vielzahl von Beuteln (110) den Behälter (200) dreht, während die Expansionszeitpunkte der Vielzahl von Beuteln (110) je nach dem Rohmaterial im Inneren der Vielzahl von Beuteln (110) unterschiedlich ausgebildet sind.

12. Der Behälter (200) nach Anspruch 11, wobei der Beutel (110) um den Umfang des Behälters (200) gewickelt ist, während er die Form eines Bandes bildet, und wenn der Beutel (110) durch das Rohmaterial expandiert wird, wird der Behälter (200) gedreht, während der Beutel (110) allmählich entlang einer Längsrichtung des Bandes expandiert wird.

13. Der Behälter (200) nach Anspruch 12, wobei das Rohmaterial an einem Seitenende des Beutels (110), der die Form des Bandes hat, vorgesehen ist.

14. Der Behälter (200) nach Anspruch 11, wobei eine Richtung, in der ein Beutel (110) aus der Vielzahl von Beuteln (110) den Behälter (200) dreht, entgegengesetzt zu einer Richtung ist, in der ein anderer Beutel (110) aus der Vielzahl von Beuteln (110) den Behälter (200) dreht.

## Revendications

1. Structure tournante (100) comprenant :
une poche (110) couplée à un récipient (200) et enroulée autour d'une circonférence du récipient ; et
une matière première disposée à l'intérieur de la poche, dans laquelle la matière première dilate la poche (110) en étant sublimée ou évaporée tout en étant chauffée, et le récipient (200) est mis en rotation selon la dilatation de la poche (110), dans laquelle il existe une pluralité des poches (110),
et **caractérisée en ce que**
la pluralité de poches (110) font tourner le récipient (200) tandis que des instants de dilatation de la pluralité de poches (110) sont formés différemment selon la matière première à l'intérieur de la pluralité de poches (110).

2. Structure tournante (100) selon la revendication 1, dans laquelle la poche (110) est enroulée autour de la circonférence du récipient (200) tout en formant une forme d'une bande, et lorsque la poche (110) est dilatée par la matière première, la poche (110) est dilatée progressivement le long d'une direction longue de la bande.

3. Structure tournante (100) selon la revendication 2, dans laquelle la matière première est disposée au niveau d'une extrémité latérale de la poche (110) sous la forme de la bande, et la poche (110) commence à être dilatée à partir de l'extrémité latérale de la poche (110).

4. Structure tournante (100) selon la revendication 1, dans laquelle la poche (110) comprend un trou d'épingle (120) qui peut être ouvert par une pression gazeuse.

5. Structure tournante (100) selon la revendication 4, dans laquelle une pression interne résiduelle à l'intérieur de la poche (110) peut être ajustée selon une taille du trou d'épingle (120) ouvert par la pression gazeuse.

6. Structure tournante (100) selon la revendication 4, dans laquelle il existe une pluralité des poches (110), et le trou d'épingle (120) d'une poche est relié au trou d'épingle (120) d'une autre poche par l'intermédiaire d'une partie de liaison (130).

7. Structure tournante (100) selon la revendication 1, dans laquelle un instant de dilatation de la poche (110) est ajusté selon une quantité de la matière première à l'intérieur de la poche (110).

8. Structure tournante (100) selon la revendication 1, dans laquelle un instant de dilatation de la poche (110) est ajusté selon une température de sublimation ou une température d'évaporation de la matière première.

9. Structure tournante (100) selon la revendication 1, dans laquelle la matière première est disposée à l'intérieur de la poche (110) dans un état congelé, et un instant de dilatation de la poche (110) est ajusté selon une forme congelée de la matière première.

10. Structure tournante (100) selon la revendication 1, dans laquelle un instant de dilatation de la poche (110) est ajusté selon une constante diélectrique de la matière première.

11. Récipient (200) comportant une structure tournante (100), selon une quelconque revendication précédente, ayant une poche couplée à celui-ci et enroulée autour d'une circonférence du récipient (200), le récipient (200) comprenant
un récipient (200) stockant un contenu à l'intérieur de celui-ci et ayant une forme de récipient,
dans lequel la matière première à l'intérieur de la poche (110) de la structure tournante (100) dilate la poche (110) en étant sublimée ou évaporée tout en étant chauffée, et le récipient (200) est mis en rotation selon la dilatation de la poche (110),
**caractérisé en ce qu'**il existe une pluralité des poches et dans lequel la pluralité de poches (110) font tourner le récipient (200) tandis que des instants de dilatation de la pluralité de poches (110) sont formés différemment selon la matière première à l'intérieur de la pluralité de poches (110).

12. Récipient (200) selon la revendication 11, dans lequel la poche (110) est enroulée autour de la circonférence du récipient (200) tout en formant une forme d'une bande, et lorsque la poche (110) est dilatée par la matière première, le récipient (200) est mis en rotation lorsque la poche (110) est progressivement dilatée le long d'une direction longue de la bande.

13. Récipient (200) selon la revendication 12, dans lequel la matière première est disposée au niveau d'une extrémité latérale de la poche (110) ayant la forme de la bande.

14. Récipient (200) selon la revendication 11, dans lequel une direction dans laquelle une poche (110) parmi la pluralité de poches (110) fait tourner le récipient (200) est opposée à une direction dans laquelle une autre poche (110) parmi la pluralité de poches (110) fait tourner le récipient (200).
